# EUROPEAN PATENT APPLICATION

(11) **EP 4 180 685 A1**
(43) Date of publication of application: **17.05.2023**
(21) Application number: 21208088.1
(22) Date of filing: 12.11.2021
(51) Int. Cl.: F16D 65/18, F16D 55/22

(54) **BRAKE DEVICE**

(71) Applicant: KNORR-BREMSE Systeme für Nutzfahrzeuge GmbH, 80809 München (DE)
(72) Inventor: PESCHEL, Michael, 82296 Schöngeising (DE); BLESSING, Michael, 80687 München (DE); ADAMCZYK, Philipp, 82347 Bernried (DE); KLINGNER, Matthias, 82275 Emmering (DE); KRÜGER, Sven Philip, 81476 München (DE); SCHALLER, Sebastian, 86462 Langweid (DE); HÖS, Levente, 1047 Budapest (HU); GYÖRKE, Zsombor, 8360 Keszthely (HU); SZABO, Janos, 1101 Budapest (HU); MONORI, Gyula, 6065 Lakitelek (UG); MLINARCSEK, Csaba, 1165 Budapest (HU); KOKREHEL, Csaba, 1119 Budapest (HU); HEIGL, Korbinian, 85652 Pliening (DE); TOTH, Janos, 6000 Kecskemét (HU); SCHÖFBERGER, Tobias, 84048 Mainburg (DE); NAKAMURA, Tatsuro, 1027 Budapest (HU); HOLLOSI, Mate, 1097 Budapest (HU)
(74) Representative: Prüfer & Partner mbB Patentanwälte · Rechtsanwälte

(57) **Abstract**

A brake device (1) for a vehicle, in particular for a commercial vehicle, is disclosed, comprising:
- at least two friction elements (2, 3) configured to generate a braking effect by contacting frictionally with each other; and
- a transmission mechanism (4) comprising:
- a first driving interface (4a) configured to be driven according to a first driving movement and to be connected to a first driving device configured to generate the first driving movement;
- at least one second driving interface (4b) configured to be driven according to a second driving movement and to be connected to a second driving device (5) configured to generate the second driving movement, wherein
the transmission mechanism (4) is configured to move at least one of the at least two friction elements (2, 3) to contact with each other in reaction to the first driving movement and/or to the second driving movement to generate the braking effect.

Further, a brake system, a vehicle and an assembly method are disclosed.

## Description

The present invention relates to a brake device, a brake system with such brake device, a vehicle with such brake device and/or such brake system and to an assembly method.

According to current developments in the vehicle industry, more and more systems are electrified. One example for this development is the electrification of the drivetrain. Such vehicles mostly use their electric driving machine(s) to reduce their speed. However, there is still a need for friction brakes since braking by the electric driving machines is not available in every situation, for example, when the electric energy storage of the vehicle cannot store electric energy any more.

In commercial vehicles, friction brakes are usually pneumatically actuated, by pneumatic actuating devices. However, other actuation concepts come up as well, for example an electromechanically actuated brake with an electro-mechanic driving device. Depending from the actuation concept, different driving devices are used. Further, depending from the driving device and the vehicle concept, different assembly positions of the driving device in relation to the brake device are possible.

Therefore, there is a need for a brake device, which can be assembled with different actuated brake systems, respectively different actuated actuating driving devices, and with different vehicle concepts as well.

This problem is solved by the subject-matters of the independent claims. Advantageous embodiments are the subject-matter of the dependent claims.

According to the invention, a brake device for a vehicle is provided. The vehicle is, in particular a commercial vehicle. The brake device comprises:
- at least two friction elements configured to generate a braking effect by contacting frictionally with each other; and
- a transmission mechanism comprising:
- a first driving interface configured to be driven according to a first driving movement and to be connected to a first driving device configured to generate the first driving movement;
- at least one second driving interface configured to be driven according to a second driving movement and to be connected to a second driving device configured to generate the second driving movement, wherein
the transmission mechanism is configured to move at least one of the at least two friction elements to contact with each other in reaction to the first driving movement and/or to the second driving movement to generate the braking effect.

Preferably, the first driving device and the second driving device are located in different positions with relation to the brake device.

Therefore, a brake device is provided, wherein at least two driving interfaces are comprised. When the brake device is attached to a vehicle or to a brake system, not every driving interface has to be connected. This allows to provide a brake device which is attachable to several vehicles or several brake systems, with one, two or more driving devices either on different positions, or with different kinematic connections. For example, if the brake device comprises three driving interfaces, but the vehicle comprises only two driving devices (for example one driving device for service braking and one driving device for parking) the third driving interface of the brake device can be left unconnected, wherein the other two driving interfaces are connected to these two driving devices. The same brake device can be attached to another vehicle or brake system with only one driving device or with three driving devices. Therefore, the invention provides a brake device, which is generally applicable in different vehicles or brake systems.

Preferably, the first driving movement is a rotational movement or a translational movement or a combination of a rotational and translational movement. Alternatively or additionally, the second driving movement is a rotational movement or a translational movement or a combination of a rotational and translational movement.

For a rotational movement, the first driving interface and/or the second driving interface preferably comprises a rotatable shaft. The corresponding first or second driving device may comprise a rotational operating motor, in particular an electric motor. For a translational movement, the first driving interface and/or the second driving interface preferably comprises a translational actuating element. The corresponding first or second driving device may comprise a translational operating motor, in particular an electric linear motor and/or a combination of a piston and a cylinder.

Preferably, the first driving interface is configured for a frictional and/or a form-fit connection with the first driving device. Alternatively or additionally the at least one second driving interface is configured for a frictional and/or a form-fit connection with the at least one second driving device. This preferably leads to a switchable connection of the respective driving devices to the corresponding driving interfaces.

Preferably, the transmission mechanism comprises an output interface configured to execute an output driving movement as a reaction to the first driving movement and/or to the second driving movement, wherein the brake device is configured to move at least one of the at least two friction elements to contact with each other in reaction to the output driving movement. The output interface may comprise an output transfer element, in particular a shaft or a translational transfer element, configured to act directly or via intermediate elements on the at least two friction elements.

Preferably, the transmission mechanism comprises a gear unit between the output interface and the first driving interface and/or the at least second driving interface, wherein the gear unit is configured to transfer a driving movement of the first driving interface and/or the at least second driving interface into the output driving movement. In the following several embodiments of the gear unit are described.

Preferably, when the first driving movement and/or the second driving movement comprise/comprises a rotational moving component, the gear unit is configured to transfer the rotational moving component into a translational component of the output driving movement. Preferably, for transferring the rotational moving component of the first driving movement and/or the second driving movement into a translational moving component of the output driving movement, the gear unit comprises a combination of a pinion and rack and/or a spindle drive and/or a ball screw drive and/or a mechanism with a ball ramp and/or a cam drive. In general, the rotational movement or the rotational movement component is transferred into a translational movement component or movement, which may be transferred directly or via intermediate elements to the at least two friction elements for frictionally contacting each other.

Preferably, when the first driving movement and/or the second driving movement comprise/comprises a translational moving component, the gear unit is configured to transfer the translational moving component into a rotational component of the output driving movement. Preferably, for transferring the translational moving component of the first driving movement and/or the second driving movement into a rotational moving component of the output driving movement, the gear unit comprises a combination of a pinion and rack and/or a spindle drive and/or a ball screw drive and/or a mechanism with a ball ramp and/or a cam drive. In general, the translational movement or the translational movement component is transferred into a rotational movement component or movement, which may be transferred directly or via intermediate elements to the at least two friction elements for frictionally contacting each other.

Preferably, when the first driving movement and/or the second driving movement comprise/comprises a rotational movement component, the gear unit is configured to transfer the rotational component of the first driving movement and/or of the second driving movement into a rotational component of the output driving movement. This is preferably realized by locking of the gear unit and/or by a direct drive.

Alternatively or additionally, when the first driving movement and/or the second driving movement comprise/comprises a translational moving component, the gear unit is configured to transfer the translational component of the first driving movement and/or of the second driving movement into a translational component of the output driving movement. This is preferably realized by locking of the gear unit and/or by translational driving of an actuating element.

Preferably, the brake device comprises:
- a first driving device configured to generate the first driving movement and connected to the first driving interface, preferably, the first driving device comprises an electrical, electromechanical, fluidic and/or mechanical driving device; and/or
- second driving device configured to generate the second driving movement and connected to the at least one second driving interface, preferably, the second driving device comprises an electrical, electromechanical, fluidic and/or mechanical driving device.

In this application the term "fluidic" particularly includes "pneumatically" and/or "hydraulically".

Since the brake device comprises an electrical or electromechanical driving device, the brake device may form an electro-mechanic brake actuator for an electro-mechanic brake system. With a fluidic driving device, the brake device may be provided in a fluidic brake system. A mechanical driving device may comprise a spring, configured to hold the at least two brake elements in contact durably. For example a spring-loaded actuator is provided as mechanical driving device, wherein the brake device can be used as a parking brake. Other driving devices like a fluidic or electro-mechanic driving device allow the use of the brake device as a service brake.

Preferably, the brake device without the first and the second driving device is configured to fit in a cylinder, which is a projection of an inner diameter of a rim of the vehicle. Further preferably, the brake device with at least one driving device, for example the first driving device is configured to fit in the cylinder. In particular, the brake device with at least two driving devices, for example the first and second driving device is configured to fit in the cylinder. This leads to a compact brake device, which can in particular be provided at least partially in a rim of the vehicle. Therefore, it is possible to move the brake devices to the outer ends of the axles of the vehicle, in particular to the wheel end, and therefore, installation space between the rims or wheels is no longer blocked by the brake devices.

Preferably, the at least two friction elements comprise a combination of a brake disc and a brake pad and/or a combination of a brake drum and a brake shoe and/or a combination of at least two lamella and/or a multi-disc brake.

Preferably, the first driving interface and/or the second driving interface comprise/comprises a clutch, a gear stage, a drivable actuating element, a shaft and/or a lever. These elements can be used for transmitting and/or redirecting the first driving movement and/or the second driving movement.

Preferably, the brake interface comprises a cover to cover, in particular to seal, the first driving interface and/or the second driving interface when it is unconnected. Such cover can be used to avoid entry of dirt and/or dust and/or humidity into the brake device and/or to cover a moving part of the unconnected driving interface.

Preferably, the transmission mechanism is configured to contact the at least two friction elements according to a service brake function and/or according to a parking brake function of the brake device in reaction to the first driving movement and/or to the second driving movement.

Alternatively or additionally, the transmission mechanism is configured to contact the at least two friction elements according to a simultaneous driving of the first driving interface and of the at least one second driving interface to increase the braking effect. According to this embodiment, a boost function of the brake can be realized, wherein, when more than one driving device is connected to the brake device, the driving devices can assist each other or they can reach an increased braking effect, which is higher than a braking effect, which is achievable by a single driving unit.

In the following further subject-matters of the invention are described. If features relating to these subject-matters have already been mentioned above, these are to be regarded as optional embodiments of the following subject-matters.

According to a further aspect of the invention, a brake system for a vehicle, in particular for a commercial vehicle, is provided. The brake system comprises:
- a brake device as described above; and
- a first driving device connected to the first driving interface of the brake device,
wherein
at least one of the at least one second driving interface is unconnected, wherein preferably, the at least one of the at least one second driving interface is closed with a cover, in particular sealed with the cover, and/or wherein
the brake system comprises a second driving device connected to at least one of the at least one second driving interface of the brake device, wherein the first driving device is configured to drive the first driving interface according to a service brake function and/or according to a parking brake function and/or wherein the second driving device is configured to drive the at least one of the at least one second driving interface according to a service brake function and/or according to a parking brake function and/or wherein the brake system is configured to drive the first driving interface and the at least one of the at least one second driving interface simultaneously by the corresponding first driving device and by the corresponding second driving device to increase the braking effect.

The brake system is preferably configured as an electro-mechanic brake system or as a fluidic brake system.

According to a further aspect of the invention, a vehicle, in particular a commercial vehicle, is provided. The vehicle comprises a brake device as described above or a brake system as described above. Preferably, the vehicle is configured as a commercial vehicle, as a combination of a towing vehicle and a trailer, as a truck or as a bus. Further preferably, the vehicle is configured as an electric vehicle comprising a combination of a traction battery and/or of a fuel cell with an electric machine, or as hybrid vehicle or as a conventional vehicle.

According to a further aspect of the invention, an assembly method for a brake device or a brake system, is provided. The method comprises the following steps:
- providing a brake device, in particular a brake device as described above, comprising a first driving interface configured to be driven according to a first driving movement and to be connected to a first driving device configured to generate the first driving movement and at least one second driving interface configured to be driven according to a second driving movement and to be connected to a second driving device configured to generate the second driving movement;
- connecting of the first driving interface to a first driving device;
- attaching of the brake device in a vehicle, wherein the at least one second driving interface is left unconnected in the vehicle, wherein preferably, the at least one second driving interface is closed with a cover, in particular sealed with the cover.

In the following, preferred embodiments of the invention are described by reference to the attached drawings.
- Fig. 1: shows a general embodiment of a brake device.
- Fig. 2: shows a first embodiment of a transmission mechanism.
- Fig. 3: shows a second embodiment of a transmission mechanism.
- Fig. 4: shows a third embodiment of a transmission mechanism.

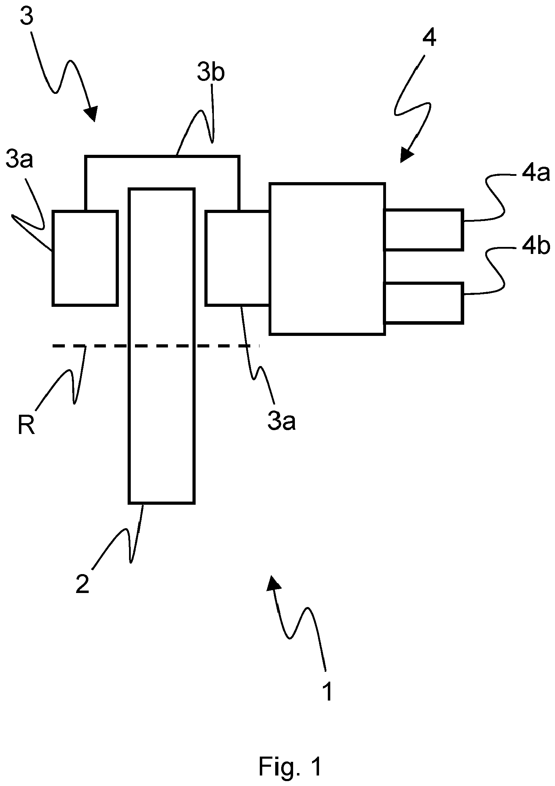

**Fig. 1** shows a general embodiment of a brake device.

A brake device 1 is shown comprising two friction elements 2, 3. The first friction element 2 is a brake disc provided rotatable around a rotational axis R. The second friction element 3 is a combination of two brake pads 3a provided on both sides of the first friction element 2 and a brake caliper 3b, wherein both brake pads 3a are provided in the caliper 3b. The caliper 3b may be configured as a floating or fixed caliper. However, since the focus of the invention is not directed to the caliper 3b, different caliper embodiments are possible. For generating a brake effect, both brake pads 3a are configured to frictionally contact the first friction element 2 on the left and right disc surface, whereby a rotational movement of the friction element 2 around the rotational axis R is reduced.

Further, a transmission mechanism 4 is shown comprising a first driving interface 4a and a second driving interface 4b. The first driving interface 4a is configured to be driven according to a first driving movement and to be connected to a first driving device configured to generate the first driving movement. The second driving interface 4b is configured to be driven according to a second driving movement and to be connected to a second driving device configured to generate the second driving movement. The transmission mechanism 4 is configured to contact the first friction element 2 and the second friction element 3, respectively the brake pads 3a, in reaction to the first driving movement and/or to the second driving movement to generate the braking effect.

That means that the brake device 1 can be operated via the first and/or the second driving interface 4a, 4b. When the brake device 1 is assembled in a vehicle or in a brake system, the brake device 1 may be connected to two driving devices, accordingly. However, it is also possible to connect only one driving interface, for example the first driving interface 4a, to a driving device, wherein the other driving interface, for example the second driving interface 4b, is left unconnected. According to some embodiments, the unconnected driving interface is closed by a cover and preferably sealed by this cover. Therefore, a brake device 1 is provided with two driving interfaces 4a, 4b, which may be provided in different vehicles or brake systems, wherein the two driving interfaces 4a, 4b may be connected to driving devices as required.

In some embodiments, the first driving movement is a rotational movement or a translational movement or a combination of a rotational and translational movement, preferably a curved track, in particular according to an involute. That means, a first driving device, which is connected to the first driving interface 4a can be a rotary driving device or a translational driving device. Further driving devices, which execute a driving movement, which is a combination of a rotational movement and a translational movement, are possible as well if the first driving interface 4a is configured accordingly.

In some embodiments, the second driving movement is a rotational movement or a translational movement or a combination of a rotational and translational movement. That means, a second driving device, which is connected to the second driving interface 4b can be a rotary driving device or a translational driving device. Further driving devices, which execute a driving movement, which is a combination of a rotational movement and a translational movement, are possible as well if the second driving interface 4b is configured accordingly.

The transmission mechanism 4 may comprise an output interface, which is configured to execute an output driving movement as a reaction to the first driving movement and/or to the second driving movement, wherein the brake device is configured to contact the at least two friction elements in reaction to the output driving movement.

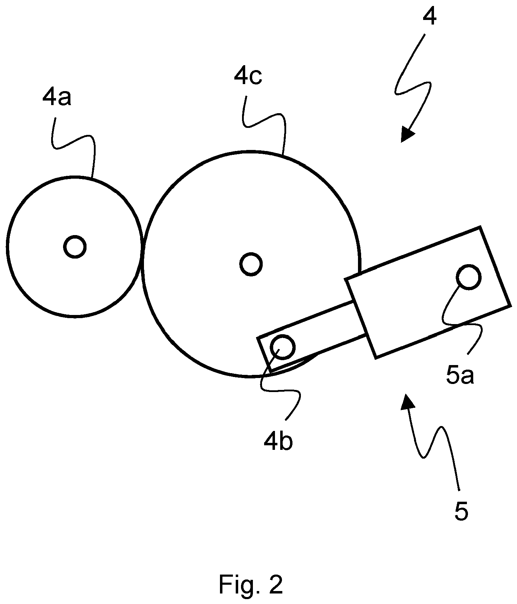

The transmission mechanism 4 comprises a gear unit between the output interface and the first driving interface 4a and/or the at least second driving interface 4b, wherein the gear unit is configured to transfer a driving movement of the first driving interface 4a and/or the at least second driving interface 4b into the output driving movement. Embodiments of such gear units are shown in the Figures 2 to 4.

In the embodiment shown in the drawing, the output driving movement is a translational movement along a horizontal direction to move the brake pads 3a towards the corresponding surfaces of the first friction element 2. According to other embodiments, the output driving movement may be a rotational movement or a combination of a rotational and a translational movement, preferably a curved track, in particular according to an involute.

In the embodiment shown in the drawing a brake disc arrangement is shown by the two friction elements 2, 3. According to other embodiments, the two friction elements may comprise a brake drum and at least one corresponding brake shoe forming a drum brake arrangement. According to other embodiments, the two friction elements may comprise a combination of at least two lamella and/or a multi-disc brake.

**Fig. 2** shows a first embodiment of a transmission mechanism.

A transmission mechanism 4 is shown comprising a first driving interface 4a and a second driving interface 4b. The first driving interface 4a is configured as a pinion rotatable supported in the drawing plane around an axis perpendicular to the drawing plane. Further, the transmission mechanism 4 comprises a gear wheel 4c rotatable supported in the drawing plane around an axis perpendicular to the drawing plane.

The pinion of the first driving interface 4a and the gear wheel 4c are engaged with each other, wherein a rotational first driving movement of the first driving interface 4a is transferred to the gear wheel 4c. In this embodiment, the first driving interface 4a is connected to a first driving device (not shown) configured to drive the first driving interface 4a according to the first driving movement.

Further, the second driving interface 4b is configured as a pivot on the gear wheel 4c, which is spaced apart from the rotational axis of the gear wheel 4c, wherein a second driving device 5 is connected to the second driving interface 4b. Due to the position of the second driving interface 4b spaced apart from the rotational axis of the gear wheel 4c, the second driving interface 4b forms a lever rotatable around the rotational axis of the gear wheel 4c. The second driving device 5 is further supported by a pivot 5a, which is stationary fixed. The second driving device 5 is configured to change its length between the second driving interface 4b and the pivot 5a. By changing its length, the second driving device 5 applies a torque on the gear wheel 4c and rotates the gear wheel accordingly.

The gearwheel 4c may form the output interface of the transmission mechanism 4. In this case, the friction elements of the brake device are configured to contact with each other according to a rotational output driving movement. When, according to another embodiment, the friction elements are configured to contact with each other according to a translational output driving movement, the gear wheel 4c can be engaging with a rack configured to transfer the rotational movement of the gear wheel 4c into a translational output driving movement.

Since the gear wheel 4c is provided between the first and second driving interface 4a, 4b, the gear wheel 4c forms a gear unit configured to transfer the driving movement of the first and second driving interfaces 4a, 4b into an output driving movement.

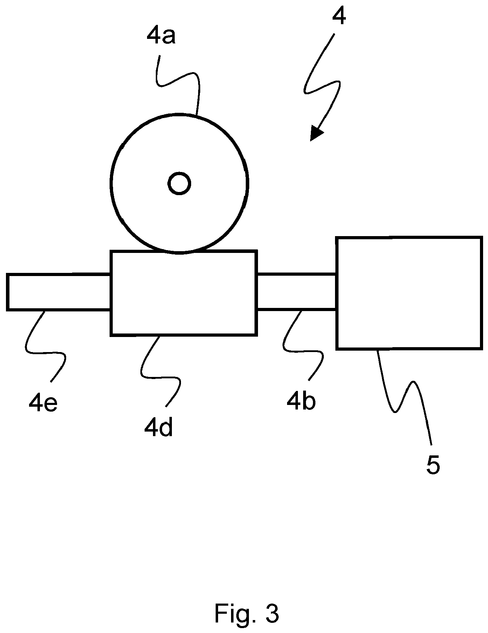

**Fig. 3** shows a second embodiment of a transmission mechanism.

A transmission mechanism 4 is shown comprising a first driving interface 4a configured as a pinion provided rotatable around a rotational axis perpendicular to the drawing plane and a second driving interface 4b configured as a spindle 4e.

The left free end of the spindle 4e is configured to transfer or to output a translational output driving movement to corresponding friction elements 3 as for example shown in Fig. 1. Therefore, the spindle 4e, in particular its left free end, acts as an output interface.

The spindle 4e extends through a nut 4d, wherein spindle 4e and nut 4d are engaged with each other forming a spindle drive.

The first driving interface 4a is connected to a first driving device (not shown) configured to drive the first driving interface 4a according to a rotational first driving movement. The spindle 4e, respectively the right end of the spindle, acting as the second driving interface 4b, is connected to a second driving device 5, wherein the spindle 4e can be driven by the second driving device 5 according to a translational second driving movement.

The pinion of the first driving interface 4a is engaged with gear teeth on the outer surface of the nut 4d, wherein pinion and nut 4d form a worm drive. Therefore, according to a rotational driving movement of the first driving interface 4a, the nut 4d is driven as well, wherein the spindle 4e is driven via the spindle nut drive as well.

When the spindle 4e is driven translationally via the second driving interface 4b, the pinion of the first driving interface 4a is moved rotationally or, if a free running state is possible, the first driving interface 4a is not moved. It is also possible, when the spindle 4e is driven rotationally by the first driving interface 4a, the second driving device 5 is moved as well or, if a free running state is possible, the second driving device 5 is not moved.

It is also possible, that when the spindle 4e is driven translationally via the second driving interface 4b, the spindle and nut drive gets locked according to a self-locking configuration and the nut 4d is moved in the same direction as the spindle 4e.

Since the spindle and nut drive is provided between the first driving interface 4a, the spindle and nut drive forms a gear unit configured to transfer the driving movement of the first driving interface 4a into an output driving movement. Further, the spindle 4e acts as a transfer element to transfer the translational movement of the second driving device 5 as well.

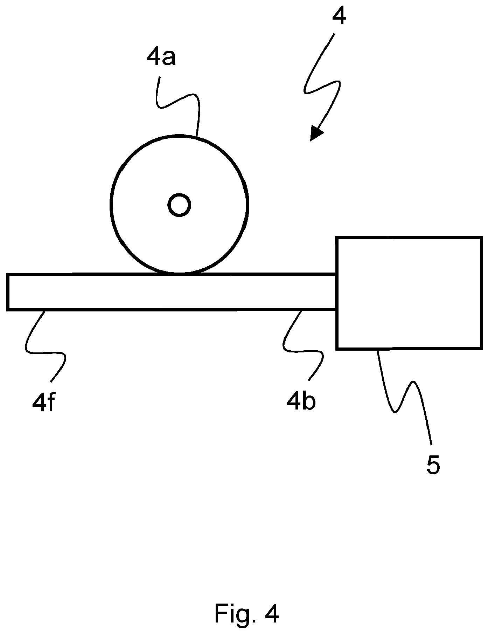

**Fig. 4** shows a third embodiment of a transmission mechanism.

Since this embodiment is similar to the embodiment of Fig. 3, only the differences are pointed out in the following.

Instead of the spindle 4e and nut 4d, a combination of a pinion and a rack 4f is provided. Similar to the embodiment shown in Fig. 3, the first driving interface 4a is formed by the pinion. This pinion is engaged with the rack 4f, wherein the rack can be moved horizontally according to a first driving movement of a first driving device (not shown) via the first driving interface 4a. Further, a second driving device 5 is connected to the rack 4f, wherein the rack acts as the second driving interface 4b and wherein the rack can be moved translationally by the second driving device 5.

In all embodiments shown in the Figures 2 to 4, the second driving device 5 is a translational driving device, configured to change its length in an axial direction. However, the physical principle of the second driving device 5 can be different. For example the second driving device 5 can comprise a combination of a piston and a cylinder, which is fluidically, in particular pneumatically or hydraulically actuated. Alternatively, the second driving device 5 can comprise a translational electric motor.

Since the pinion and rack drive is provided between the first driving interface 4a, the pinion and rack drive forms a gear unit configured to transfer the driving movement of the first driving interface 4a into an output driving movement. Further, the rack 4f acts as a transfer element to transfer the translational movement of the second driving device 5 as well.

### LIST OF REFERENCE SIGNS

- 1: brake device
- 2: first friction element
- 3: second friction element
- 3a: brake pad
- 3b: brake caliper
- 4: transmission mechanism
- 4a: first driving interface
- 4b: second driving interface
- 4c: gear wheel
- 4d: nut
- 4e: spindle
- 4f: rack
- 5: second driving device
- 5a: pivot
- R: rotational axis

## Claims

1. Brake device (1) for a vehicle, in particular for a commercial vehicle, comprising:
- at least two friction elements (2, 3) configured to generate a braking effect by contacting frictionally with each other; and
- a transmission mechanism (4) comprising:
- a first driving interface (4a) configured to be driven according to a first driving movement and to be connected to a first driving device configured to generate the first driving movement;
- at least one second driving interface (4b) configured to be driven according to a second driving movement and to be connected to a second driving device (5) configured to generate the second driving movement, wherein
the transmission mechanism (4) is configured to move at least one of the at least two friction elements (2, 3) to contact with each other in reaction to the first driving movement and/or to the second driving movement to generate the braking effect.

2. Brake device (1) according to claim 1, wherein
the first driving device and the second driving device (5) are located in different positions with relation to the brake device (1), and/or
the first driving movement is a rotational movement or a translational movement or a combination of a rotational and translational movement; and/or wherein
the second driving movement is a rotational movement or a translational movement or a combination of a rotational and translational movement.

3. Brake device (1) according to one of the preceding claims, wherein
the first driving interface (4a) is configured for a frictional and/or a form-fit connection with the first driving device; and/or wherein
the at least one second driving interface (4b) is configured for a frictional and/or a form-fit connection with the at least one second driving device (5).

4. Brake device (1) according to one of the preceding claims, wherein
the transmission mechanism (4) comprises an output interface configured to execute an output driving movement as a reaction to the first driving movement and/or to the second driving movement, wherein the brake device (1) is configured to move at least one of the at least two friction elements (2, 3) to contact with each other in reaction to the output driving movement.

5. Brake device (1) according to claim 4, wherein
the transmission mechanism (4) comprises a gear unit between the output interface and the first driving interface (4a) and/or the at least second driving interface (4b), wherein the gear unit is configured to transfer a driving movement of the first driving interface (4a) and/or the at least second driving interface (4b) into the output driving movement.

6. Brake device (1) according to claim 5, wherein
when the first driving movement and/or the second driving movement comprise/comprises a rotational moving component, the gear unit is configured to transfer the rotational moving component into a translational component of the output driving movement, wherein preferably,
for transferring the rotational moving component of the first driving movement and/or the second driving movement into a translational moving component of the output driving movement, the gear unit comprises a combination of a pinion and rack and/or a spindle drive and/or a ball screw drive and/or a mechanism with a ball ramp and/or a cam drive.

7. Brake device (1) according to one of the claims 5 or 6, wherein
when the first driving movement and/or the second driving movement comprise/comprises a translational moving component, the gear unit is configured to transfer the translational moving component into a rotational component of the output driving movement, wherein preferably,
for transferring the translational moving component of the first driving movement and/or the second driving movement into a rotational moving component of the output driving movement, the gear unit comprises a combination of a pinion and rack and/or a spindle drive and/or a ball screw drive and/or a mechanism with a ball ramp and/or a cam drive.

8. Brake device (1) according to one of the claims 5 to 7, wherein
when the first driving movement and/or the second driving movement comprise/comprises a rotational movement component, the gear unit is configured to transfer the rotational component of the first driving movement and/or of the second driving movement into a rotational component of the output driving movement, preferably by locking of the gear unit and/or by a direct drive, and/or wherein
when the first driving movement and/or the second driving movement comprise/comprises a translational moving component, the gear unit is configured to transfer the translational component of the first driving movement and/or of the second driving movement into a translational component of the output driving movement, preferably by locking of the gear unit and/or by translational driving of an actuating element.

9. Brake device (1) according to one of the preceding claims, comprising
- a first driving device configured to generate the first driving movement and connected to the first driving interface (4a), preferably, the first driving device comprises an electrical, electromechanical, fluidic and/or mechanical driving device; and/or
- second driving device (5) configured to generate the second driving movement and connected to the at least one second driving interface (4b), preferably, the second driving device (5) comprises an electrical, electromechanical, fluidic and/or mechanical driving device.

10. Brake device (1) according to one of the preceding claims, wherein
the at least two friction elements (2, 3) comprise a combination of a brake disc and a brake pad (3a) and/or a combination of a brake drum and a brake shoe and/or a combination of at least two lamella and/or a multi-disc brake.

11. Brake device (1) according to one of the preceding claims, wherein
the first driving interface (4a) and/or the second driving interface (4b) comprise/comprises a clutch, a gear stage, a drivable actuating element, a shaft and/or a lever, and/or wherein
the brake device (1) comprises a cover to cover, in particular to seal, the first driving interface (4a) and/or the second driving interface (4b) when it is unconnected.

12. Brake device (1) according to one of the preceding claims, wherein
the transmission mechanism (4) is configured to contact the at least two friction elements (2, 3) according to a service brake function and/or according to a parking brake function of the brake device (1) in reaction to the first driving movement and/or to the second driving movement, and/or wherein
the transmission mechanism (4) is configured to contact the at least two friction elements (2, 3) according to a simultaneous driving of the first driving interface (4a) and of the at least one second driving interface (4b) to increase the braking effect.

13. Brake system for a vehicle, in particular for a commercial vehicle, comprising
- a brake device (1) according to one of the claims 1 to 12; and
- a first driving device connected to the first driving interface (4a) of the brake device (1), wherein
at least one of the at least one second driving interface (4b) is unconnected,
wherein preferably, the at least one of the at least one second driving interface (4b) is closed with a cover, in particular sealed with the cover, and/or wherein
the brake system comprises a second driving device (5) connected to at least one of the at least one second driving interface (4b) of the brake device (1), wherein the first driving device is configured to drive the first driving interface (4a) according to a service brake function and/or according to a parking brake function and/or wherein the second driving device (5) is configured to drive the at least one of the at least one second driving interface (4b) according to a service brake function and/or according to a parking brake function and/or wherein the brake system is configured to drive the first driving interface (4a) and the at least one of the at least one second driving interface (4b) simultaneously by the corresponding first driving device and by the corresponding second driving device (5) to increase the braking effect.

14. Vehicle, in particular a commercial vehicle, comprising a brake device (1) according to one of the claims 1 to 12 or a brake system according to claim 13.

15. Assembly method for a brake device or a brake system, comprising the following steps:
- providing a brake device, in particular a brake device (1) according to claims 1 to 12, comprising a first driving interface (4a) configured to be driven according to a first driving movement and to be connected to a first driving device configured to generate the first driving movement, and at least one second driving interface (4b) configured to be driven according to a second driving movement and to be connected to a second driving device (5) configured to generate the second driving movement;
- connecting of the first driving interface (4a) to a first driving device;
- attaching of the brake device (1) in a vehicle, wherein the at least one second driving interface (4b) is left unconnected in the vehicle, wherein preferably, the at least one second driving interface (4b) is closed with a cover, in particular sealed with the cover.
